# EUROPEAN PATENT APPLICATION

(11) **EP 4 502 511 A1**
(43) Date of publication of application: **05.02.2025**
(21) Application number: 24192486.9
(22) Date of filing: 02.08.2024
(51) Int. Cl.: F25D 23/06, F25D 25/00

(54) **SUPPORT SYSTEM FOR A VACUUM INSULATED PANEL**

(30) Priority: 03.08.2023 US 202318364647
(71) Applicant: Whirlpool Corporation, Benton Harbor, MI 49022 (US)
(72) Inventor: Lessa, Marcel B., Benton Harbor, 49022 (US); Burns, John J., Benton Harbor, 49022 (US); Karl, Jackson F., Benton Harbor, 49022 (US)
(74) Representative: Eisenführ Speiser

(57) **Abstract**

A vacuum insulated panel (10) includes an outer panel (12) and an inner panel (14) operably coupled to one another to define a vacuum cavity (16) therebetween. The inner panel (14) includes first and second slots (62, 64) that are spaced-apart from one another. A first bracket assembly (32) is operably coupled to the inner panel (14) and covers the first slot (62) of the inner panel (14). A second bracket assembly (34) is operably coupled to inner panel (14) and covers the second slot (64) of the inner panel (14). The first and second bracket assemblies (32, 34) are coupled to the inner panel (14) in a sealed manner so as to maintain a vacuum drawn in the vacuum cavity (16).

## Description

### BACKGROUND OF THE DISCLOSURE

The present disclosure generally relates to a vacuum insulated panel, and more specifically, to a vacuum insulated panel having a support system configured to support multiple bin assemblies.

### SUMMARY OF THE DISCLOSURE

According to one aspect of the present disclosure, a door includes an outer panel having a generally planar body portion with inner and outer surfaces and a sidewall with a front edge. The sidewall of the outer panel extends outwardly from the inner surface of the body portion of the outer panel. The door further includes an inner panel having a generally planar body portion with inner and outer surfaces, a sidewall with a front edge, and at least one elongate slot disposed vertically along the generally planar body portion. The sidewall of the inner panel extends outwardly from the inner surface of the body portion of the inner panel. The door further includes a trim breaker interconnecting the outer panel and the inner panel to form a vacuum cavity therebetween. The door further includes at least one bracket assembly positioned within the vacuum cavity of the door and coupled to the inner surface of the inner panel. The at least one bracket assembly is aligned with the at least one elongate slot of the inner panel to provide access to the at least one bracket assembly therethrough.

According to another aspect of the present disclosure, a vacuum insulated panel includes an outer panel and an inner panel operably coupled to the outer panel to define a vacuum cavity therebetween. The inner panel includes at least one elongate slot disposed therethrough and positioned vertically therealong, and at least one bracket assembly positioned within the vacuum cavity and coupled to an inner surface of the inner panel. The at least one bracket assembly is aligned with the at least one elongate slot of the inner panel to provide access to the at least one bracket assembly therethrough.

According to yet another aspect of the present disclosure, a vacuum insulated panel includes an outer panel and an inner panel operably coupled to the outer panel to define a vacuum cavity therebetween. The inner panel includes a body portion having inner and outer surfaces. The inner panel further includes first and second slots disposed through the body portion that are spaced-apart from one another. A first bracket assembly is operably coupled to the inner surface of the inner panel. The first bracket assembly covers the first slot of the inner panel. A second bracket assembly is operably coupled to the inner surface of the inner panel. The second bracket assembly covers the second slot of the inner panel.

These and other features, advantages, and objects of the present disclosure will be further understood and appreciated by those skilled in the art by reference to the following specification, claims, and appended drawings.

### BRIEF DESCRIPTION OF THE DRAWINGS

In the drawings:
FIG. 1 is a front perspective view of an appliance having a door in an open position with a plurality of bins supported on a support assembly;
FIG. 2 is a top perspective view of the door of FIG. 1 as removed from the appliance with a bin assembly coupled thereto;
FIG. 3 is an exploded top perspective view of the door of FIG. 2;
FIG. 4 is a front elevation view of the door of FIG. 2;
FIG. 5 is a cross-section view of the door of FIG. 4 taken at line V;
FIG. 6 is a fragmentary cross-section view of an inner panel of the door of FIG. 3 taken at line VI;
FIG. 7 is a fragmentary zoomed in view of the inner panel of FIG. 6;
FIG. 8 is a rear perspective view of a bin assembly;
FIG. 9 is a top perspective view of a bracket assembly;
FIG. 10 is a fragmentary zoomed in view of the bracket assembly of FIG. 9;
FIG. 11 is an exploded top perspective view of the bracket assembly of FIG. 9;
FIG. 12 is a fragmentary zoomed in view of the bracket assembly of FIG. 11;
FIG. 13 is a cross-section view of the bracket assembly of FIG. 9 taken at line XIII;
FIG. 14 is a fragmentary cross-section view of the bracket assembly of FIG. 9 taken at line XIV;
FIG. 15 is a cross-section view of the bracket assembly of FIG. 9 taken at line XIII and coupled to an inner panel within a vacuum cavity;
FIG. 16 is a fragmentary cross-section view of the door of FIG. 2 taken at line XVI; and
FIG. 17 is a fragmentary cross-section view of the door of FIG. 2 taken at line XVII.

The components in the figures are not necessarily to scale, emphasis instead being placed upon illustrating the principles described herein.

### DETAILED DESCRIPTION

The present illustrated embodiments reside primarily in combinations of method steps and apparatus components related to a vacuum insulated door panel configured to support multiple bin assemblies. Accordingly, the apparatus components and method steps have been represented, where appropriate, by conventional symbols in the drawings, showing only those specific details that are pertinent to understanding the embodiments of the present disclosure so as not to obscure the disclosure with details that will be readily apparent to those of ordinary skill in the art having the benefit of the description herein. Further, like numerals in the description and drawings represent like elements.

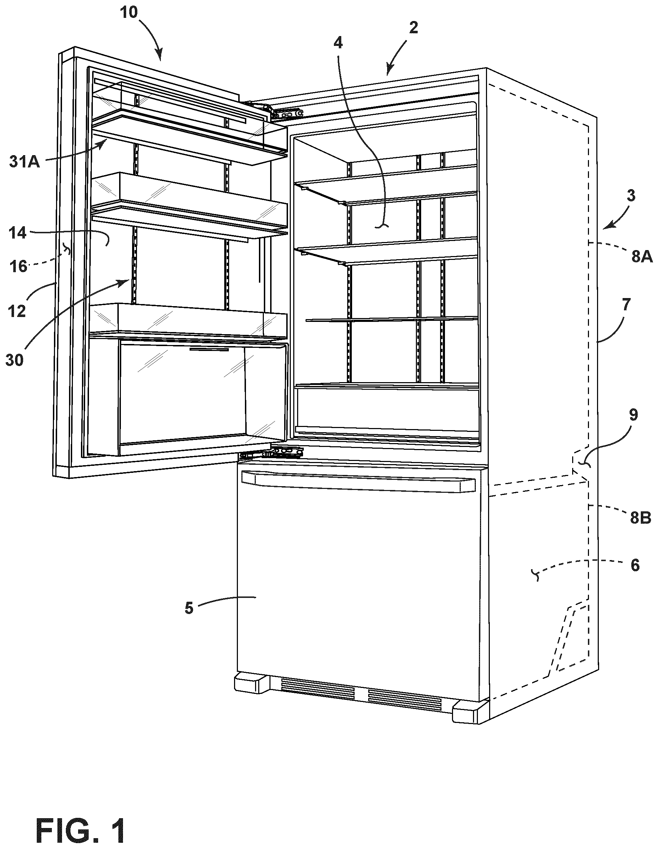

For purposes of description herein, the terms "upper," "lower," "right," "left," "rear," "front," "vertical," "horizontal," and derivatives thereof shall relate to the disclosure as oriented in FIG. 1. Unless stated otherwise, the term "front" shall refer to the surface of the element closer to an intended viewer, and the term "rear" shall refer to the surface of the element further from the intended viewer. However, it is to be understood that the disclosure may assume various alternative orientations, except where expressly specified to the contrary. It is also to be understood that the specific devices and processes illustrated in the attached drawings, and described in the following specification are simply exemplary embodiments of the inventive concepts defined in the appended claims. Hence, specific dimensions and other physical characteristics relating to the embodiments disclosed herein are not to be considered as limiting, unless the claims expressly state otherwise.

The terms "including," "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element proceeded by "comprises a ... " does not, without more constraints, preclude the existence of additional identical elements in the process, method, article, or apparatus that comprises the element.

Referring now to FIG. 1, reference numeral 10 generally designates a door for an appliance 2, and more specifically, a vacuum insulated door. The appliance 2 is illustrated as a refrigerator appliance, however, it is contemplated that the door 10 disclosed herein may be used with a variety of appliances, structures, or for insulation purposes other than those associated with a refrigerator appliance. Specifically, the illustrated appliance 2 is a bottom mount refrigerator having the door 10 and a second door 5. The second door 5 is also contemplated to be a vacuum insulated door. The appliance 2 includes a cabinet 3 that defines a first compartment 4 and a second compartment 6. The insulated door 10 is contemplated to be rotatably coupled to the cabinet 3 for selectively providing access to the first compartment 4, which may be a refrigerator compartment. The second insulated door 5 is contemplated to be slideably coupled to the cabinet 3 in a drawer-like manner for selectively providing access to the second compartment 6, which may be a freezer compartment. The cabinet 3 of the appliance 2 is an insulated structure having a cabinet wrapper 7 with a first liner 8A and a second liner 8B positioned therein to define a vacuum insulating space 9 therebetween. In non-limiting examples, the appliance 2 can be a bottom mount refrigerator, a bottom mount French door refrigerator, a top mount refrigerator, a side-by-side refrigerator, a four-door French door refrigerator, and/or a five door French door refrigerator, each of which can have one or more insulated doors 10.

As noted above, the insulated door 10 is a vacuum insulated panel. As illustrated in FIGS. 1-5, the insulated door 10 includes an outer panel 12 coupled with an inner panel 14 to thereby define a vacuum cavity 16 therebetween. The vacuum cavity 16 defines an insulating cavity for the door 10. The outer panel 12 and the inner panel 14 may alternatively be referred to as a structural wrapper that defines the vacuum cavity 16. The vacuum cavity 16 of the insulated door 10 and the insulating space 9 of the cabinet 3 typically includes one or more insulation materials disposed therein. The insulation materials may substantially fill the vacuum cavity 16 of the door 10, thereby forming a substantially continuous layer between the outer panel 12 and the inner panel 14 of the door 10. Similarly, the insulation materials may substantially fill the insulating space 9 of the cabinet, thereby forming a substantially continuous layer between the cabinet wrapper 7 and the first and second liners 8A, 8B.

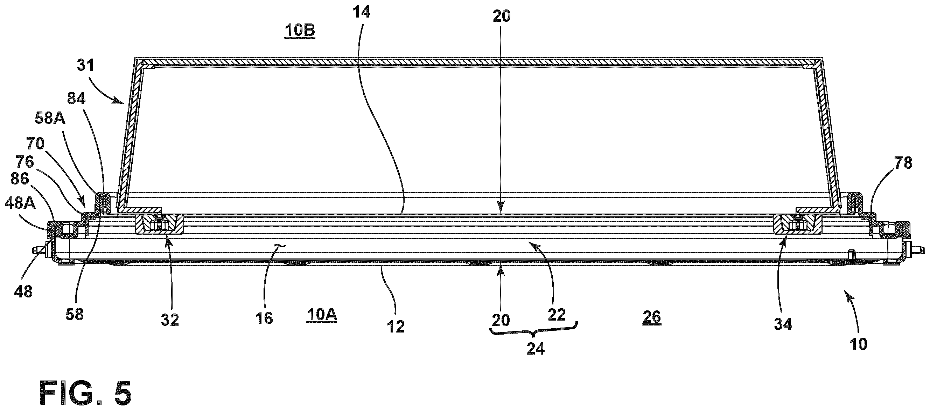

As noted above, the appliance 2 includes two insulated doors 10, 5. In this way, first and second compartments 4, 6 defined by the cabinet 3 can each be sealed with an insulated door 10, 5, respectively. The outer panel 12 and the inner panel 14 of the doors 10, 5 may be made from a material at least partially resistant to bending, deformation, or otherwise being formed in response to an inward compressive force 20, as best shown in FIG. 5. These materials for the outer panel 12 and the inner panel 14 include, but are not limited to, metals, polymers, metal alloys, combinations thereof, and/or other similar substantially rigid materials that can be used for vacuum insulated structures.

Referring specifically to FIG. 5, a vacuum 22 is defined within the vacuum cavity 16 of the door 10. The vacuum 22 defines a pressure differential 24 between an exterior 26 or outside environment of the insulated door 10 and the vacuum cavity 16 disposed within the door 10. The pressure differential 24 serves to define the inward compressive force 20 that is exerted on both the outer panel 12 and the inner panel 14. The inward compressive force 20 tends to bias the outer panel 12 and the inner panel 14 toward one another and toward the vacuum cavity 16. The vacuum 22 is typically defined by evacuation of the insulated door 10 at an evacuation port which is later sealed after an evacuation procedure. Over time, gas can infiltrate into the vacuum cavity 16 from an area outside the appliance 2, which can diminish the negative pressure of the vacuum 22. The infiltration of gas is sometimes referred to as gas permeation, which can result in a decrease in the partial vacuum 22 over time. Gas permeation leads to a reduced vacuum pressure which then leads to reduced insulative properties, so every effort is made to keep the insulting cavity 16 a sealed cavity. This can make the mounting of bin assemblies and storage shelves to the door 10 difficult as standard mounting techniques are often not available for a vacuum insulated door. Such techniques not suited for a vacuum insulated door include the mounting of bracket assemblies to the inner panel 14 with fasteners. When mounting such brackets, the fasteners would create holes in the inner panel 14 that can lead to increased gas permeation and possibly total loss of the vacuum 22 within the vacuum cavity 16 of the door 10.

Referring again to FIG. 1, the door 10 is shown having a support system 30 for supporting a plurality of bin assemblies 31A. Each bin assembly of the plurality of bin assemblies 31A is configured to couple to the support system 30 at a multitude of vertical locations along the support system 30, as further described below.

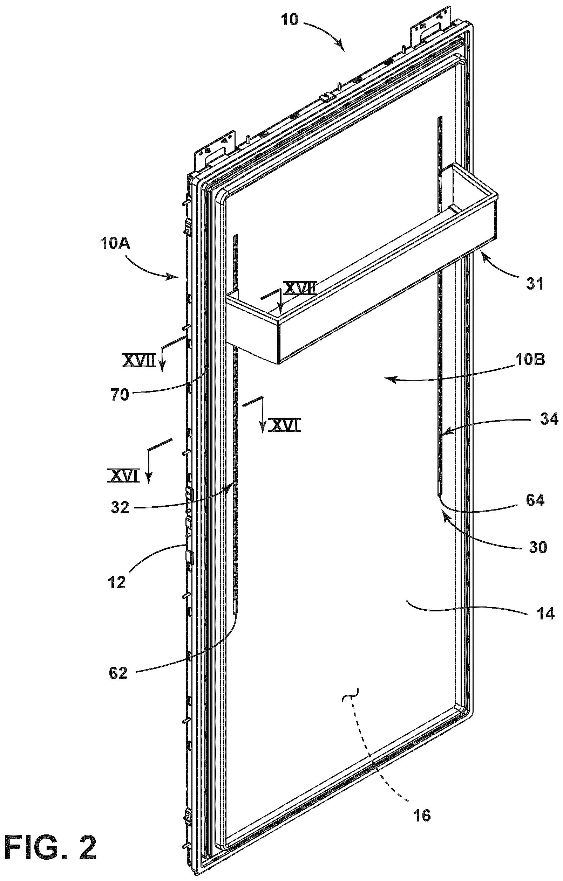

Referring now to FIG. 2, the support system 30 of the door 10 is shown having a single bin assembly 31 coupled thereto. As shown in FIG. 2, the door 10 includes an exterior side 10A and an interior side 10B. The support system 30 includes first and second upright bracket assemblies 32, 34 that are accessible through the inner panel 14 on the interior side 10B of the door 10, as further described below. As further shown in FIG. 2, the outer panel 12 and the inner panel 14 are interconnected by a trim breaker 70, to form the vacuum cavity 16 therebetween. The trim breaker 70 is contemplated to be a polymeric member formed from a suitable material that is substantially impervious to gasses to maintain the vacuum 22 in the vacuum cavity 16 defined between the outer panel 12 and the inner panel 14 as interconnected by the trim breaker 70. The material composition of the trim breaker 70 is also contemplated to include a low coefficient of thermal conductivity to reduce or prevent transfer of heat between the outer panel 12 and the inner panel 14. For use with the present concept, the trim breaker 70 may be formed utilizing a polymeric material in an injection molding process. Other materials suitable to form the trim breaker 70 may include, but are not limited to, polyureas, polyisocyanurates, polyesters, polyphenols, polyepoxides, thermoplastic elastomers, polycarbonate, and nylon materials. It is further contemplated that the trim breaker 70 may be overmolded to the outer panel 12 and the inner panel 14 at perimeter edges thereof. In an overmolded construction, the door 10 can be a unitary part after the trim breaker 70 is cast onto the perimeter edges of the outer panel 12 and the inner panel 14. Further, it is contemplated that portions of the inner panel 14 and the outer panel 12 can be coupled to coupling features of the trim breaker 70 and retained therein using an adhesive as further described below.

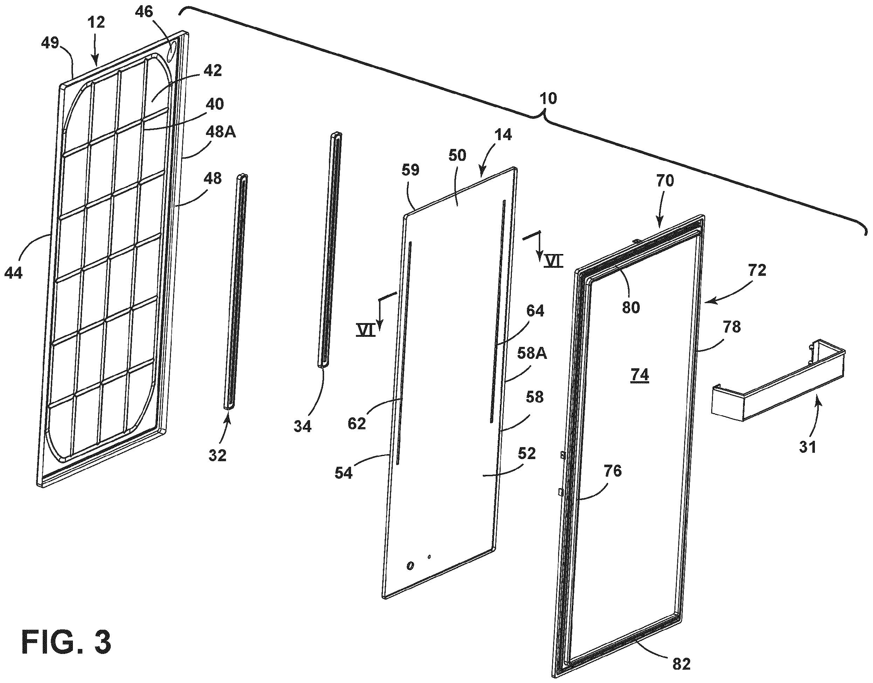

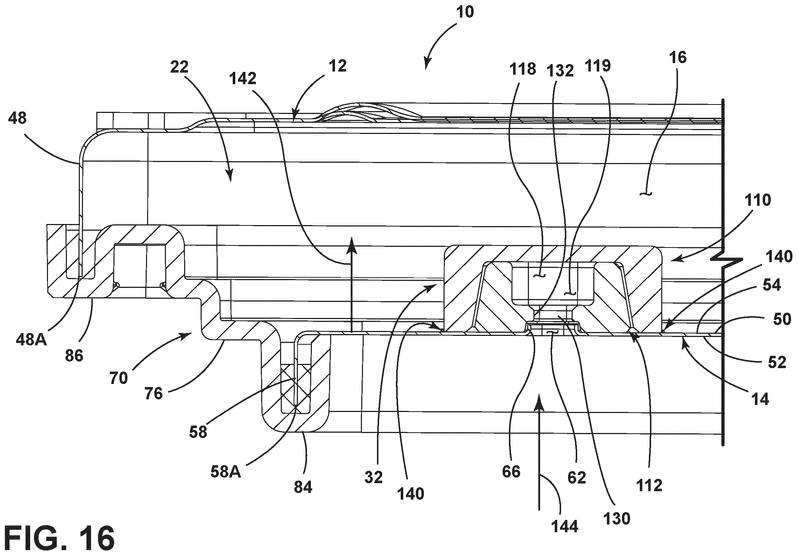

Referring now to FIG. 3, an exploded view of the door 10 is shown, wherein the outer panel 12 and inner panel 14 are exploded away from the trim breaker 70 that interconnects the outer panel 12 and inner panel 14. As shown in FIG. 3, the outer panel 12 of the door 10 includes a generally planar body portion 40 with an inner surface 42 and an outer surface 44. The outer panel 12 may include an access aperture 46 disposed therethrough which can be used to fill the door 10 with an insulating material and may also be used as an evacuation port to draw a vacuum on the door 10, as described herein. The outer surface 44 of the body portion 40 of the outer panel 12 defines the exterior side 10A (FIG. 2) of the door 10 as assembled. As further shown in FIG. 3, the outer panel 12 includes a sidewall 48 extending outwardly from the generally planar body portion 40 of the outer panel 12 along a periphery 49 thereof. The sidewall 48 of the outer panel 12 includes a front edge 48A which is configured to be received in a channel of the trim breaker 70, as further described below with reference to FIG. 16, to connect the outer panel 12 to the trim breaker 70.

As further shown in FIG. 3, the inner panel 14, like the outer panel 12, includes a generally planar body portion 50 having an inner surface 54 and an outer surface 52. The outer surface 52 of the body portion 50 of the outer panel 12 defines the interior side 10B (FIG. 2) of the door 10 as assembled. The inner panel 14 further includes a sidewall 58 extending outwardly from the generally planar body portion 50 of the inner panel 14 along a periphery 59 thereof. The sidewall 58 of the inner panel 14 includes a front edge 58A which is configured to be received in a channel of the trim breaker 70, as further described below with reference to FIG. 16, to connect the outer panel 12 to the trim breaker 70. The sidewalls 48, 58 of the outer and inner panels 12, 14, respectively, are contemplated to be disposed around the entire periphery 49, 59 of the body portions 40, 50 of the respective outer and inner panels 12, 14. As further shown in FIG. 3, the inner panel 14 includes first and second elongate slots 62, 64 that are spaced-apart from one another and disposed through the body portion 50 of inner panel 14 in an upright or vertical configuration along the inner panel 14. In assembly, the first and second elongate slots 62, 64 of the inner panel 14 are configured to align with the first and second upright bracket assemblies 32, 34 in a manner as shown in FIG. 2 to provide access to the same. The first and second elongate slots 62, 64 may be configured to run, in a vertical direction, the entire length of the inner panel 14. More preferably, the first and second elongate slots 62, 64 run a length that is more than 50% of the length of the inner panel 14.

As further shown in FIG. 3, the trim breaker 70 is shown having a frame assembly 72 surrounding an open window 74. The frame assembly 72 of the trim breaker 70 is defined by first and second upright members 76, 78 which are spaced-apart from one another and interconnected by upper and lower cross members 80, 82. The first and second upright members 76, 78 and upper and lower cross members 80, 82 are interconnected, such that the trim breaker 70 is contemplated to be a unitary member.

As further shown in FIG. 3, the bin assembly 31 and the first and second upright bracket assemblies 32, 34 are shown exploded away from the inner panel 14. In assembly, the first and second upright bracket assemblies 32, 34 are configured to couple to the inner surface 54 of the inner panel 14 in alignment with the first and second elongate slots 62, 64 of the inner panel 14, respectively. The bin assembly 31 includes a number of engagement members that are configured to engage the first and second upright bracket assemblies 32, 34 to support the bin assembly 31 at a multitude of vertical locations therealong.

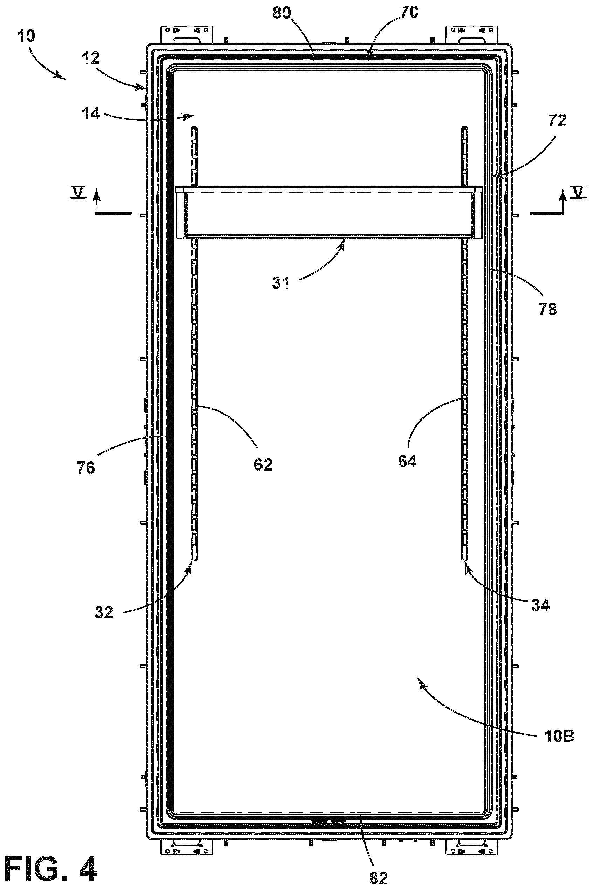

Referring now to FIG. 4, the door 10 of FIG. 3 is shown in an assembled condition from the interior side 10B thereof.

Referring now to FIG. 5, the trim breaker 70 is shown having an inner channel 84 and an outer channel 86 spaced-apart from one another. Both the inner channel 84 and the outer channel 86 are forwardly opening channels that are configured to receive front edges 48A, 58A of the sidewalls 48, 58 of the outer panel 12 and the inner panel 14, respectively. The interconnection of the inner panel 14 with the inner channel 84 of the trim breaker 70 and the outer panel 12 with the outer channel 86 of the trim breaker is best shown in FIG. 16. The inner channel 84 and the outer channel 86 are contemplated to be continuously disposed around the entirety of the frame assembly 72 of the trim breaker 70 along the first and second upright members 76, 78 and the upper and lower cross members 80, 82. In this way, the interconnection between trim breaker 70 and the inner panel 14 and outer panel 12 is complete around the entire frame assembly 72 of the trim breaker 70 for providing the sealed vacuum cavity 16 therebetween. As further shown in FIG. 5, the outer channel 86 surrounds the inner channel 84, such that the outer channel 86 is disposed outwardly around the inner channel 84. Specifically, the outer channel 86 is disposed adjacent to a perimeter of the trim breaker 70, while the inner channel 84 is inset from the perimeter of the trim breaker 70. Further, the outer channel 86 is disposed in forward position relative to the inner channel 84. Said differently, the inner channel 84 inset from the outer channel 86 relative to the exterior side 10A of the door 10.

With the inner panel 14 and the outer panel 12 coupled to the trim breaker 70, as shown in FIG. 5, the sealed vacuum cavity 16 is formed. The vacuum cavity 16 is configured to receive an insulating material that may be described as a vacuum core material. The vacuum core material may comprise a plurality of individual core panels that are preformed and positioned between the outer panel 12, the inner panel 14 and the trim breaker 70. Alternatively, the vacuum core material may comprise a silica powder or other suitable loose filler or free-flowing material that is inserted (e.g. poured, blown, compacted) into the vacuum cavity 16, after the outer panel 12 and the inner panel 14 are interconnected by the trim breaker 70. This free-flowing material can be in the form of various silica-based materials, such as fumed silica, precipitated silica, nano-sized, and/or micro-sized aerogel powder, rice husk ash powder, perlite, glass spheres, hollow glass spheres, cenospheres, diatomaceous earth, combinations thereof, and other similar insulating particulate material. The core material may be inserted into the vacuum cavity 16 through the access aperture 46 of the outer panel 12, which opens into the vacuum cavity 16. The trim breaker 70 is contemplated to engage the outer panel 12 and the inner panel 14 in a sealed manner so as to create an airtight cavity within the vacuum cavity 16. In this way, the door 10 is capable of having the vacuum 22 drawn within the vacuum cavity 16, and maintaining the vacuum 22 given the sealed connections between the trim breaker 70, the outer panel 12 and the inner panel 14. Further, the vacuum 22 is maintained within the vacuum cavity 16 of the door 10 in part by the sheet metal materials of the inner and outer panels 14, 12 and the gas impervious polymeric materials of the trim breaker 70. The vacuum 22 may have a pressure level of less than 1 atm, about 0.5 atm, about 0.4 atm, about 0.3 atm, about 0.2 atm, about 0.1 atm, about 0.01 atm, or less than about 0.001 atm.

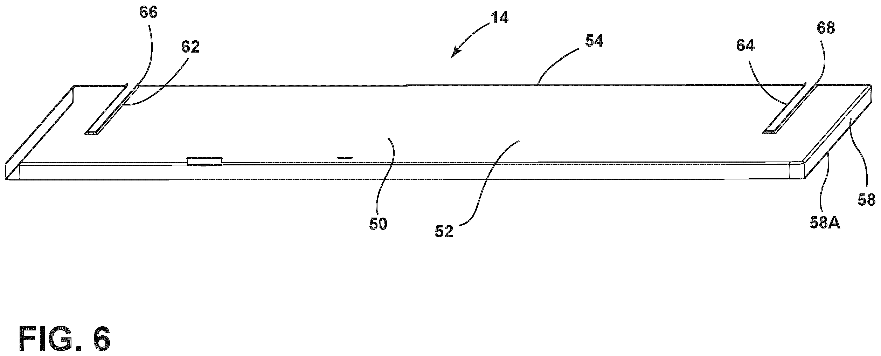

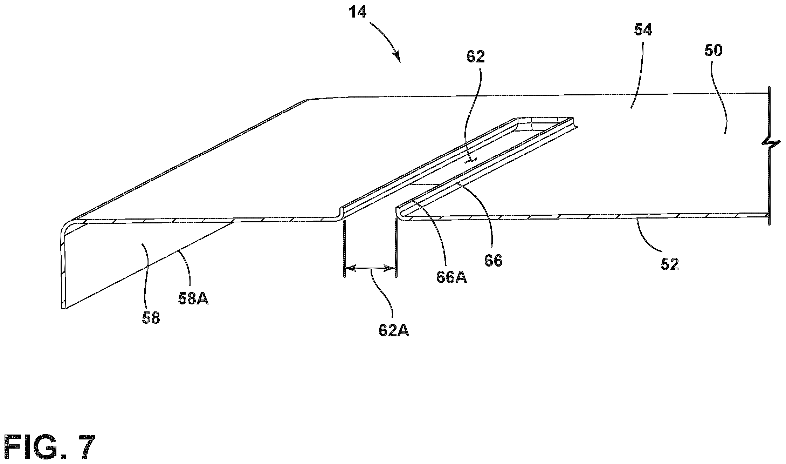

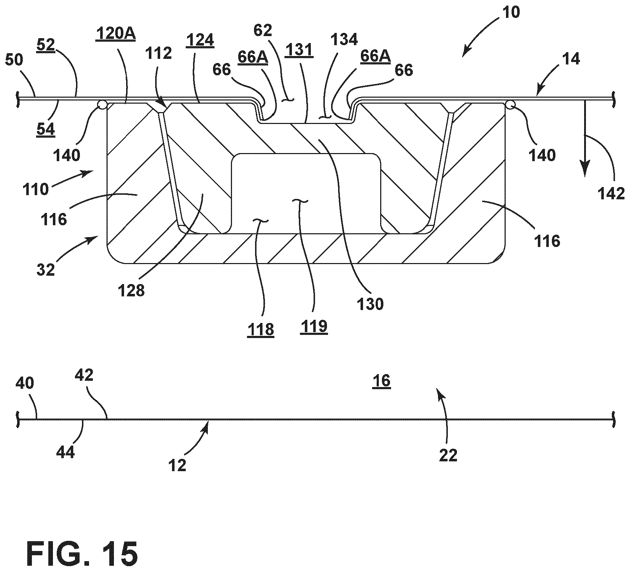

Referring now to FIG. 6, the cross-section view of the inner panel 14 shows that the first and second elongate slots 62, 64 each include an inwardly extending rim portion 66, 68, respectively. The rim portions 66, 68 fully surround the first and second elongate slots 62, 64 and extend inwardly in an opposite direction relative to the sidewall 58 of the inner panel 14. This configuration is better shown in FIG. 7. In assembly, the inwardly extending rim portions 66, 68 are configured to abut the first and second bracket assemblies 32, 34 as further described below with reference to FIG. 15 to provide a clean aesthetic to the access point of the first and second bracket assemblies 32, 34. With specific reference to FIG. 7, the first elongate slot 62 includes a width 62A that defines a width of the opening of the first elongate slot 62. The second elongate slot 64 is also similarly configured with a width of the same size as width 62A. As shown in FIG. 7, the inwardly extending rim portion 66 of the first elongate slot 62 culminates in a rear edge portion 66A.

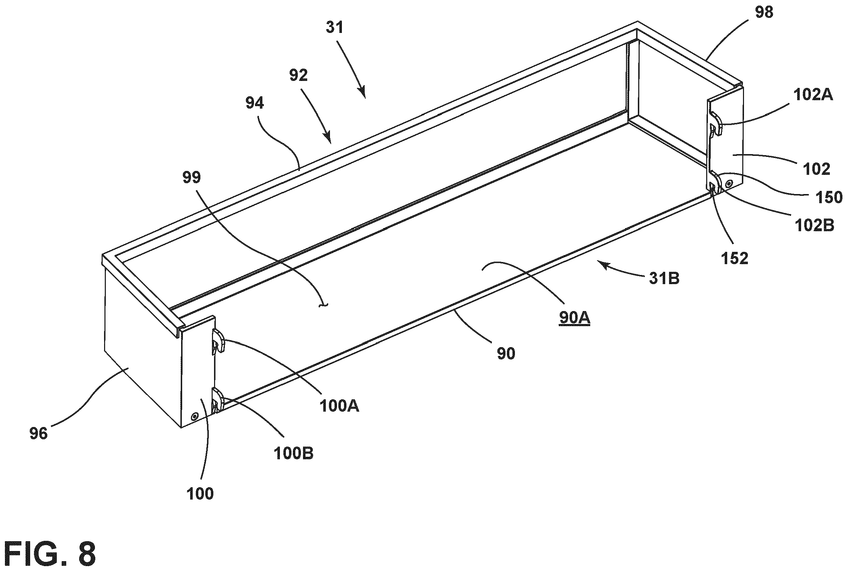

Referring now to FIG. 8, the bin assembly 31 includes a bottom wall 90 with an upper surface 90A. A sidewall 92 extends upwardly from the upper surface 90A of the bottom wall 90 and includes a front portion 94, first and second side portions 96, 98 and first and second rear portions 100, 102. In this way, the sidewall 92 includes an overall C-shaped configuration. Together, the bottom wall 90 and the sidewall 92 cooperate with the outer surface of the inner panel 14 to define a storage space 99. Extending outwardly from the first and second rear portions 100, 102 of the sidewall 92 are upper and lower hook member 100A, 100B and 102A, 102B, respectively. The upper and lower hook members 100A, 100B and 102A, 102B are disposed on opposite sides of the bin assembly 31 and are configured to removeably couple the bin assembly 31 to the first and second bracket assemblies 32, 34, as shown in FIGS. 2 and 4. As further shown in FIG. 8, the upper and lower hook members 100A, 100B and 102A, 102B rearwardly extend from a rear portion 31B of the bin assembly 31.

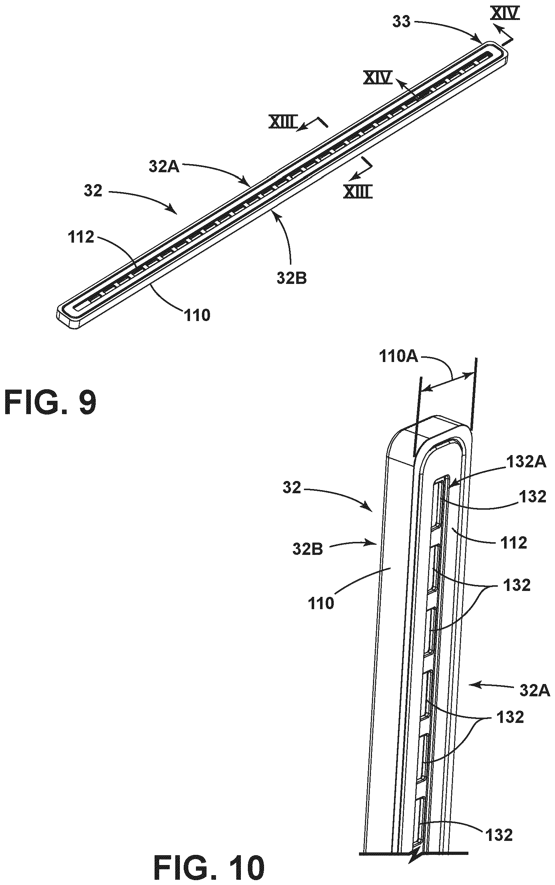

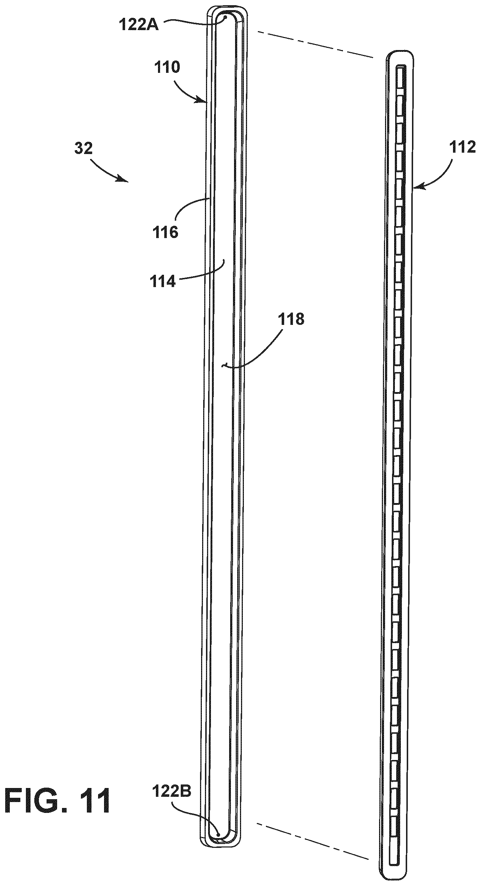

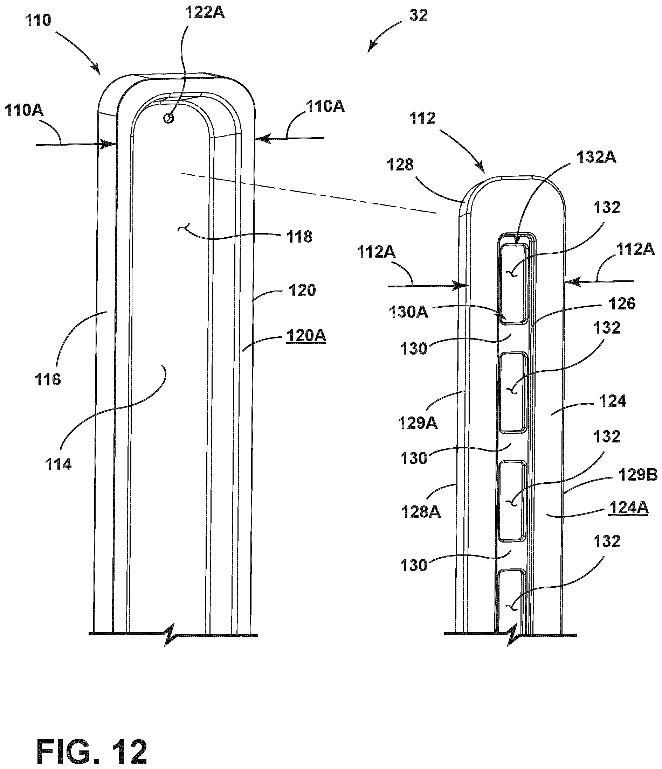

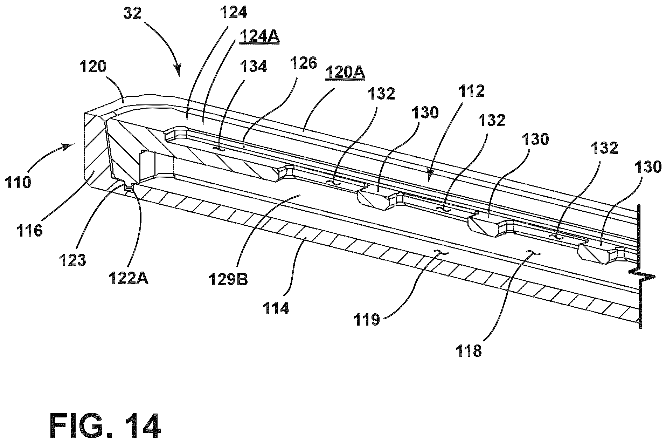

Referring now to FIGS. 9-14, the bracket assembly 32 is shown having a front portion 32A and a rear portion 32B. Bracket assembly 32 is identical to bracket assembly 34, such that the description provided herein for bracket assembly 32 will also describe bracket assembly 34. The bracket assembly 32 is an elongate member having a housing 110 and a bracket insert 112 that is received in the housing 110. Specifically, the housing 110 includes a rear wall 114 with a sidewall 116 disposed around a perimeter of the rear wall 114 and outwardly extending therefrom to define a forwardly opening interior cavity 118. The sidewall 116 includes an outer edge 120 that is defined by a substantially flat outer surface 120A. The outer edge 120 of the sidewall 116 also surrounds an entirety of the interior cavity 118. As shown in FIG. 11, the rear wall 114 of the housing 110 includes upper and lower locating features 122A, 122B in the form of inset receiving divots that are configured to receive reciprocal locating features, such as reciprocal locating feature 123 disposed on the bracket insert 112 and rearwardly extending therefrom, as best shown in FIG. 14. As shown in FIG. 12, the housing 110 includes a width 110A that is greater than a width 112A of the bracket insert 112. In this way, the width 110A of the housing 110 can accommodate the width 112A of the bracket insert 112, as shown in FIG. 12. The width 110A of the housing 110 defines an overall width of the bracket assembly 32, as shown in FIG. 10.

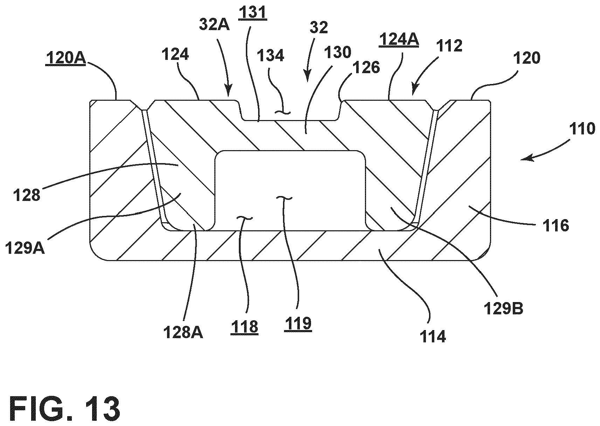

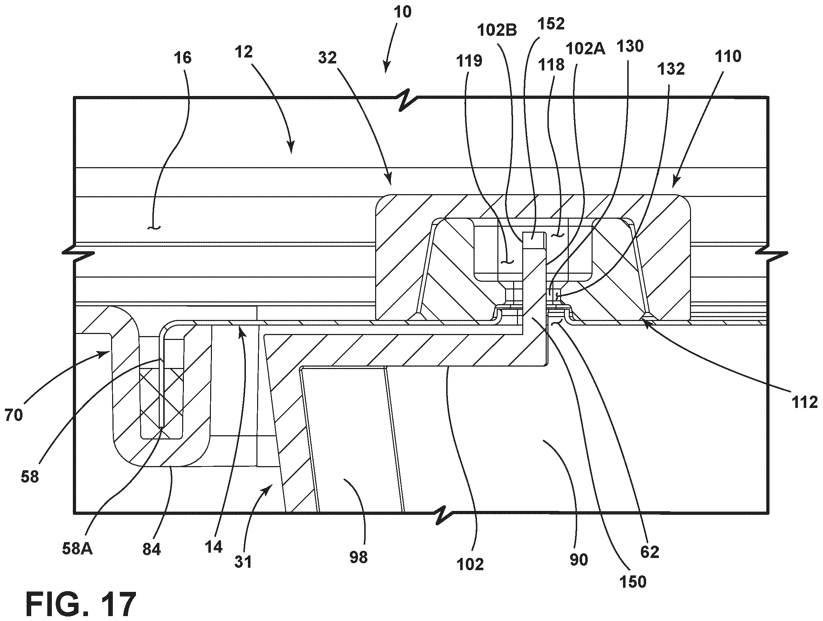

With further reference to FIGS. 9-14, the bracket insert 112 is an elongate member that includes a front wall 124 having an outer surface 124A that is substantially flat. An opening 126 is centrally disposed along the front wall 124 and is an elongate opening running substantially the length of the bracket insert 112. The bracket insert 112 further includes a sidewall 128 that extends rearwardly from the front wall 124 to a substantially flat edge portion 128A. The sidewall 128 surrounds the opening 126 and includes first and second sidewall portions 129A, 129B that are spaced-apart from one another and interconnected by cross members 130 that are evenly spaced-apart along a length of the opening 126. The cross members 130 define a plurality of cross members 130A (FIG. 12) that are positioned across the opening 126. The position of the cross members 130 defines a plurality of receiving apertures 132A (FIG. 10), wherein the receiving apertures 132 are evenly spaced-apart along the opening 126 of the bracket insert 112. In assembly, the hook members 100A, 100B and 102A, 102B of the bin assembly 31 are received through adjacent receiving apertures 132 and engage the cross members 130 of the bracket insert 112 to support the bin assembly 31 therefrom. The first and second sidewall portions 129A, 129B of sidewall 128 are spaced-apart from one another to define a receiving space 119 disposed therebetween. Each receiving aperture 132 of the plurality of receiving apertures 132A opens into the receiving space 119. The receiving space 119 extends inwardly into the vacuum cavity 16 and is configured to receive the hook members 100A, 100B and 102A, 102B of the bin assembly 31 (FIG. 17) when the bin assembly 31 is supported from the bracket assembly 32. The receiving space 119 is a spatial subset of the interior cavity 118 in that the receiving space 119 is defined by the reception of the bracket insert 112 into the interior cavity 118 of housing 110, as best shown in FIG. 13.

With specific reference to FIG. 13, the bracket insert 112 is shown received in the interior cavity 118 of housing 110. With the bracket insert 112 received in the interior cavity 118 of housing 110, the outer surface 120A of the sidewall 116 of the housing 110 is aligned with the outer surface 124A of the front wall 124 of the bracket insert 112. The cross member 130 shown in FIG. 13 includes an outer surface 131 that is inset from the outer surface 124 of the front wall 124 of the bracket insert 112 to define an inset receiving space 134 disposed along the front portion 32A of the bracket assembly 32 at opening 126. As further shown in FIG. 13, the receiving space 119 extends inwardly or rearwardly into the vacuum cavity 16 in the direction as indicated by arrow 142. The hook members 100A, 100B and 102A, 102B of the bin assembly 31 (FIG. 17) are also received into the receiving space 119 in the direction as indicated by arrow 142.

Referring now to FIG. 15, the first bracket assembly 32 is shown coupled to the inner surface 54 of the inner panel 14. Specifically, the outer surface 120 of the sidewall 116 of the housing 110 abuts the inner surface 54 of the inner panel 14. Similarly, the outer surface 124 of the sidewall 128 of the bracket insert 112 abuts the inner surface 54 of the inner panel 14. The housing 110 and the bracket insert 112 are contemplated to be metal components comprised of a metal material, such as steel, that can be welded to one another to form the bracket assembly 32. As noted above, the inner panel 14 can be comprised of a metal material, such as sheet metal. In this way, at the abutment of the outer surface 120A of the sidewall 116 of the housing 110 of the bracket assembly 32 and the inner surface 54 of the inner panel 14, a continuous bead 140 of bonding material can be provided to couple the bracket assembly 32 to the inner surface of the inner panel 14 in a sealed manner. Specifically, the bead 140 is contemplated to be disposed around an entire periphery 33 (FIG. 9) of the bracket assembly 32 at the outer edge 120 of the sidewall 116 which is positioned at the front portion 32A of the bracket assembly 32. By having a sealed engagement between the bracket assembly 32 and the inner panel 14, the vacuum 22 can be maintained within the vacuum cavity 16 between the inner panel 14 and the outer panel 12. Thus, the bracket assembly 32 of the present concept provides for a bin support system 30 that is embedded into the door panel 10. As further shown in FIG. 15, the edge portion 66A of rim portion 66 of slot 62 is received in the inset receiving space 134 and abuts the outer surface 131 of cross member 130. In this way, the engagement of the edge portion 66A of the rim portion 66 with the outer surfaces 131 of the plurality of cross members 130A provides a clean aesthetic to the interconnection of the bracket assembly 32 and the inner panel 14, while still providing access to the bracket assembly 32 through the slot 62 defined through and along the inner panel 14. The continuous bead 140 of bonding material may be defined by a weld provided between the metal components of the inner panel 14 and the bracket assembly 32. Further, it is contemplated that the continuous bead 140 may be defined by an adhesive that is applied at the location of the continuous bead 140 shown in FIG. 15, or along the substantially flat outer surface 120A of the sidewall 116 of the housing 110 of the bracket assembly 32. In any of the scenarios described above, the bonding material 140 is contemplated to be a continuous bonding material that provides a continuous seal around the entirety of the periphery 33 of the bracket assembly 32 providing an airtight engagement between the bracket assembly 32 and the inner panel 14. As used herein, the terms "airtight", "airtight manner", "sealed" and "sealed manner" are used to describe connections and cavities that are suitable for holding a vacuum.

As further shown in FIG. 15, and with reference to FIGS. 7 and 12, the overall width 110A of the bracket assembly 32 (as defined by the housing 110) is greater than the width 112A of the bracket insert 112, which is greater than the width 62A of the slot 62 of the inner panel 14. In this way, the bracket assembly 32 covers an entirety of the slot 62 when the bracket assembly 32 is coupled to the inner surface 54 of the inner panel 14. By covering an entirety of the slot 62, the bracket assembly 32 ensures that the connection between the bracket assembly and the inner panel 14 is airtight and sealed to help maintain the vacuum 22 within the vacuum cavity 16 of the door panel 10.

Referring now to FIG. 16, door panel 10 is shown from a section view that shows the interconnection between the trim breaker 70 and the outer and inner panels 12, 14, as described above. Again, this interconnection between the trim breaker 70 and the outer and inner panels 12, 14 provides for the vacuum cavity 16 having a vacuum 22 drawn thereon. The first bracket assembly 32 is shown coupled to the inner surface 54 of the body portion 50 of the inner panel 14 with the continuous bead of bonding material 140 positioned therebetween. The receiving space 119 defined by the reception of the bracket insert 112 into the housing 110 is shown rearwardly extending into the vacuum cavity in the direction as indicated by arrow 142. Thus, the first bracket assembly 32 is aligned with the elongate slot 62 of the inner panel 14 such that an receiving aperture 132 is made accessible through the inner panel 14 into the receiving space 119 of the first bracket assembly 32. As such, a hook member of the hook members 100A, 100B, and 102A, 102B of the bin assembly 31 can be received through the receiving aperture 132 for engagement with the cross member 130 in the direction as indicated by arrow 144. This engagement is best shown in FIG. 17, wherein lower hook member 102B of the bin assembly 31 is shown received through the elongate slot 62 of the inner panel 14 and further through the receiving aperture 132 of the first bracket assembly 32 into the receiving space 119. Specifically, the lower hook member 102B includes a first portion 150 extending outwardly in a rearward direction from the rear portion 102 of the sidewall 92 of the bin assembly 31 in a substantially horizontal manner. The lower hook member 102B further includes a second portion 152 extending downwardly from the first portion 150 in a vertical direction. This configuration is also shown in FIG. 8 and is contemplated to be provided for all the hook members 100A, 100B, and 102A, 102B of the bin assembly 31. Thus, as shown in FIG. 17, the second portion 152 of the hook member 102B is positioned within the receiving space 119, while the first portion 150 abuts the cross member 130 of the bracket insert 112 to support the bin assembly 31 therefrom.

According to various examples, the insulated door 10 can be used in various appliances that can include, but are not limited to, refrigerators, freezers, coolers, ovens, dishwashers, laundry appliances, and other similar appliances and fixtures within household and commercial settings.

The device disclosed herein is further summarized in the following paragraphs and is further characterized by combinations of any and all of the various aspects described herein.

According to one aspect of the present disclosure, a door includes an outer panel having a generally planar body portion with inner and outer surfaces and a sidewall with a front edge. The sidewall of the outer panel extends outwardly from the inner surface of the body portion of the outer panel. The door further includes an inner panel having a generally planar body portion with inner and outer surfaces, a sidewall with a front edge, and at least one elongate slot disposed vertically along the generally planar body portion. The sidewall of the inner panel extends outwardly from the inner surface of the body portion of the inner panel. The door further includes a trim breaker interconnecting the outer panel and the inner panel to form a vacuum cavity therebetween. The door further includes at least one bracket assembly positioned within the vacuum cavity of the door and coupled to the inner surface of the inner panel. The at least one bracket assembly is aligned with the at least one elongate slot of the inner panel to provide access to the at least one bracket assembly therethrough.

According to another aspect of the disclosure, the at least one bracket assembly covers the at least one elongate slot in a sealed manner.

According to another aspect of the disclosure, the door includes a vacuum formed in the vacuum cavity. The vacuum includes a pressure level of less than 1 atm.

According to another aspect of the disclosure, the at least one bracket assembly includes a housing having an interior cavity, and a bracket insert received within the interior cavity of the housing and having a rearwardly extending receiving space. The bracket insert includes a plurality of receiving apertures opening into the receiving space.

According to another aspect of the disclosure, the door includes a bin assembly removeably coupled to the at least one bracket assembly through the at least one elongate slot.

According to another aspect of the disclosure, the bin assembly includes at least one hook member rearwardly extending therefrom. The at least one hook member is at least partially received in the receiving space of the bracket insert through a receiving aperture of the plurality of receiving apertures.

According to another aspect of the disclosure, the inner panel and the housing of the at least one bracket assembly are comprised of a metal material. The housing of the at least one bracket assembly is coupled to the inner surface of the inner panel in an airtight manner by a continuous bead of bonding material disposed around a periphery of the housing.

According to another aspect of the disclosure, the trim breaker further includes an inner channel and an outer channel spaced-apart from one another around the trim breaker. The outer channel is outwardly disposed around the inner channel. The front edge of the inner panel is received in the inner channel of the trim breaker. The front edge of the outer panel is received in the outer channel of the trim breaker.

According to another aspect of the present disclosure, a vacuum insulated panel includes an outer panel and an inner panel operably coupled to the outer panel to define a vacuum cavity therebetween. The inner panel includes at least one elongate slot disposed therethrough and positioned vertically therealong, and at least one bracket assembly positioned within the vacuum cavity and coupled to an inner surface of the inner panel. The at least one bracket assembly is aligned with the at least one elongate slot of the inner panel to provide access to the at least one bracket assembly therethrough.

According to another aspect of the disclosure, the vacuum insulated panel includes a vacuum formed in the vacuum cavity. The vacuum includes a pressure level of less than 1 atm.

According to another aspect of the disclosure, the at least one bracket assembly is coupled to the inner surface of the inner panel in a sealed manner.

According to another aspect of the disclosure, the at least one bracket assembly includes an opening that opens into a receiving space of the at least one bracket assembly. The at least one bracket assembly further includes a sidewall having first and second sidewall portions spaced-apart from one another to define the receiving space disposed therebetween.

According to another aspect of the disclosure, the at least one bracket assembly includes a plurality of cross members interconnecting the first and second sidewall portions across the opening to define a plurality of receiving apertures. Each receiving aperture of the plurality of receiving apertures opens into the receiving space.

According to another aspect of the disclosure, the receiving space of the at least one bracket extends rearwardly into the vacuum cavity.

According to another aspect of the disclosure, the at least one slot includes a rim portion rearwardly extending therefrom and received in the opening of the at least one bracket assembly.

According to yet another aspect of the present disclosure, a vacuum insulated panel includes an outer panel and an inner panel operably coupled to the outer panel to define a vacuum cavity therebetween. The inner panel includes a body portion having inner and outer surfaces. The inner panel further includes first and second slots disposed through the body portion that are spaced-apart from one another. A first bracket assembly is operably coupled to the inner surface of the inner panel. The first bracket assembly covers the first slot of the inner panel. A second bracket assembly is operably coupled to the inner surface of the inner panel. The second bracket assembly covers the second slot of the inner panel.

According to another aspect of the disclosure, the first and second bracket assemblies each include a receiving space and a plurality of receiving apertures opening into the receiving space. The receiving space extends into the vacuum cavity.

According to another aspect of the disclosure, the vacuum insulated panel includes a bin assembly having first and second hook members that rearwardly extending from the bin assembly. The first and second hook members are received through the receiving apertures of the first and second bracket assemblies, respectively, to removeably couple the bin assembly to the vacuum insulated panel.

According to another aspect of the disclosure, the first and second bracket assemblies each include a width that is greater than a width of the first and second slots of the inner panel.

According to another aspect of the disclosure, the inner panel and the first and second bracket assemblies are comprised of a metal material. The first and second bracket assemblies are welded to the inner surface of the inner panel in an airtight manner.

According to yet another aspect of the present disclosure, a vacuum insulated panel includes an outer panel and an inner panel that are operably coupled to one another to define a vacuum cavity therebetween. The inner panel includes at least one elongate slot disposed therethrough and positioned vertically therealong. At least one bracket assembly is positioned within the vacuum cavity and is coupled to an inner surface of the inner panel. The at least one bracket assembly is aligned with the at least one elongate slot of the inner panel to provide access to the at least one bracket assembly therethrough.

According to another aspect of the disclosure, a vacuum is formed in the vacuum cavity. The vacuum includes a pressure level of less than 1 atm.

According to another aspect of the disclosure, the at least one bracket assembly is coupled to the inner surface of the inner panel in a sealed manner.

According to another aspect of the disclosure, the at least one bracket assembly includes an opening that opens into a receiving space of the at least one bracket assembly. The at least one bracket assembly further includes a sidewall having first and second sidewall portions spaced-apart from one another to define the receiving space disposed therebetween.

According to another aspect of the disclosure, the at least one bracket assembly includes a plurality of cross members interconnecting the first and second sidewall portions across the opening to define a plurality of receiving apertures. Each receiving aperture of the plurality of receiving apertures opens into the receiving space.

According to another aspect of the disclosure, the receiving space of the at least one bracket assembly extends rearwardly into the vacuum cavity.

According to another aspect of the disclosure, the at least one elongate slot includes a rim portion rearwardly extending therefrom and received in the opening of the at least one bracket assembly.

According to another aspect of the disclosure, the at least one elongate slot of the inner panel includes first and second elongate slots spaced-apart from one another.

According to another aspect of the disclosure, the at least one bracket assembly includes first and second bracket assemblies. The first bracket assembly is operably coupled to the inner surface of the inner panel. The second bracket assembly is operably coupled to the inner surface of the inner panel.

According to another aspect of the disclosure, the first bracket assembly covers the first elongate slot of the inner panel. The second bracket assembly covers the second elongate slot of the inner panel.

According to another aspect of the disclosure, the first and second bracket assemblies each include a receiving space and a plurality of receiving apertures opening into the receiving space. The receiving space extends into the vacuum cavity.

According to another aspect of the disclosure, a bin assembly includes first and second hook members rearwardly extending therefrom. The first and second hook members are received through receiving apertures of the first and second bracket assemblies, respectively, to removeably couple the bin assembly to the vacuum insulated panel.

According to another aspect of the disclosure, the first and second bracket assemblies each include a width that is greater than a width of the first and second elongate slots of the inner panel.

According to another aspect of the disclosure, the inner panel and the first and second bracket assemblies are comprised of a metal material. The first and second bracket assemblies are welded to the inner surface of the inner panel in an airtight manner.

According to another aspect of the disclosure, the vacuum insulated panel defines an appliance door.

## Claims

1. A vacuum insulated panel (10), comprising:
an outer panel (12);
an inner panel (14) operably coupled to the outer panel (12) to define a vacuum cavity (16) therebetween, wherein the inner panel (14) includes at least one elongate slot (62) disposed therethrough and positioned vertically therealong; and
at least one bracket assembly (32) positioned within the vacuum cavity (16) and coupled to an inner surface (54) of the inner panel (14), wherein the at least one bracket assembly (32) is aligned with the at least one elongate slot (62) of the inner panel (14) to provide access to the at least one bracket assembly (32) therethrough.

2. The vacuum insulated panel (10) of claim 1, including:
a vacuum formed in the vacuum cavity (16), wherein the vacuum includes a pressure level of less than 1 atm.

3. The vacuum insulated panel (10) of claim 2, wherein the at least one bracket assembly (32) is coupled to the inner surface (54) of the inner panel (14) in a sealed manner.

4. The vacuum insulated panel (10) of claim 1, wherein the at least one bracket assembly (32) includes an opening (126) that opens into a receiving space (119) of the at least one bracket assembly (32), and further wherein the at least one bracket assembly (32) further includes a sidewall (128) having first and second sidewall portions (129A, 129B) spaced-apart from one another to define the receiving space (119) disposed therebetween.

5. The vacuum insulated panel (10) of claim 4, wherein the at least one bracket assembly (32) includes a plurality of cross members (130) interconnecting the first and second sidewall portions (129A, 129B) across the opening (126) to define a plurality of receiving apertures (132A), wherein each receiving aperture (132) of the plurality of receiving apertures (132A) opens into the receiving space (119).

6. The vacuum insulated panel (10) of claim 5, wherein the receiving space (119) of the at least one bracket assembly (32) extends rearwardly into the vacuum cavity (16).

7. The vacuum insulated panel (10) of any one of claims 4-6, wherein the at least one elongate slot (62) includes a rim portion (66) rearwardly extending therefrom and received in the opening (126) of the at least one bracket assembly (32).

8. The vacuum insulated panel (10) of any one of claims 1-7, wherein the at least one elongate slot (62) of the inner panel (14) includes first and second elongate slots (62, 64) spaced-apart from one another.

9. The vacuum insulated panel (10) of claim 8, wherein the at least one bracket assembly (32) includes first and second bracket assemblies (32, 34), wherein the first bracket assembly (32) is operably coupled to the inner surface (54) of the inner panel (14), and further wherein the second bracket assembly (34) is operably coupled to the inner surface (54) of the inner panel (14).

10. The vacuum insulated panel (10) of claim 9, wherein the first bracket assembly (32) covers the first elongate slot (62) of the inner panel (14), and further wherein the second bracket assembly (34) covers the second elongate slot (64) of the inner panel (14).

11. The vacuum insulated panel (10) of claim 10, wherein the first and second bracket assemblies (32, 34) each include a receiving space (119) and a plurality of receiving apertures (132A) opening into the receiving space (119), and further wherein the receiving space (119) extends into the vacuum cavity (16).

12. The vacuum insulated panel (10) of claim 11, including:
a bin assembly (31) having first and second hook members (100A, 102A) rearwardly extending therefrom, wherein the first and second hook members (100A, 102A) are received through receiving apertures (132) of the first and second bracket assemblies (32, 34), respectively, to removeably couple the bin assembly (31) to the vacuum insulated panel (10).

13. The vacuum insulated panel (10) of any one of claims 9-12, wherein the first and second bracket assemblies (32, 34) each include a width (110A) that is greater than a width (62A) of the first and second elongate slots (62, 64) of the inner panel (14).

14. The vacuum insulated panel (10) of any one of claims 9-13, wherein the inner panel (14) and the first and second bracket assemblies (32, 34) are comprised of a metal material, and further wherein the first and second bracket assemblies (32, 34) are welded to the inner surface (54) of the inner panel (14) in an airtight manner.

15. The vacuum insulated panel (10) of any one of claims 1-14, wherein the vacuum insulated panel (10) defines an appliance door (10).
